# EUROPEAN PATENT APPLICATION

(11) **EP 4 797 842 A1**
(43) Date of publication of application: **26.08.2026**
(21) Application number: 24887465.3
(22) Date of filing: 19.07.2024
(51) Int. Cl.: H04W 72/21

(54) **COMMUNICATION METHOD AND COMMUNICATION APPARATUS**

(30) Priority: 07.11.2023 CN 202311476216
(71) Applicant: HUAWEI TECHNOLOGIES CO., LTD., Shenzhen 518129 (CN)
(72) Inventor: HE, Jia, Shenzhen, Guangdong 518129 (CN); ZHOU, Zhi, Shenzhen, Guangdong 518129 (CN); MA, Mengyao, Shenzhen, Guangdong 518129 (CN)
(74) Representative: Goddar, Heinz J.
(86) International application number: PCT/CN2024/106416
(87) International publication number: WO 2025/097841

(57) **Abstract**

This application provides a communication method and a communication apparatus, applicable to the communication field. The method includes: sending first indication information to a network apparatus, where the first indication information indicates that a terminal apparatus has a capability of extending radio frequency channel mapping data; and receiving first data information sent by the network apparatus, where the first data information includes at least one of the following: first radio frequency channel mapping data, scatterer information, or virtual transmit point information, and that the terminal apparatus has the capability of extending the radio frequency channel mapping data includes: determining second radio frequency channel mapping data based on the scatterer information and/or the virtual transmit point information. According to the foregoing method, it can be ensured that transmission of radio frequency channel mapping data is more flexible, to ensure that the first data information is efficiently transmitted.

## Description

This application claims priority to Chinese Patent Application No. 202311476216.0, filed with the China National Intellectual Property Administration on November 07, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With continuous development of wireless sensing technologies, they are widely applied in various fields. In the communication field, the application of the wireless sensing technologies enable integrated use of electromagnetic signals for communication and electromagnetic signals for sensing, to form an integrated communication and sensing system. The integrated communication and sensing system may include a terminal apparatus and a base station. The terminal apparatus and the base station may infer composition of a spatial environment by receiving electromagnetic wave signals propagated through the spatial environment, and perform detection and reconstruction of a virtual environment, to implement functions such as auxiliary positioning or auxiliary improvement of communication performance.

However, during the interaction between the terminal apparatus and the base station, the base station may send radio frequency channel mapping data to the terminal apparatus in an image compression manner. However, such data compression and data transmission manners cannot ensure quality and a size of compressed data, leading to low efficiency in transmitting the radio frequency channel mapping data.

### SUMMARY

This application provides a communication method and a communication apparatus, which can ensure that transmission of radio frequency channel mapping data is more flexible, thereby ensuring that the radio frequency channel mapping data is efficiently transmitted.

According to a first aspect, a communication method is provided, and the method includes: sending first indication information to a network apparatus, where the first indication information indicates that a terminal apparatus has a capability of extending radio frequency channel mapping data; and
receiving first data information sent by the network apparatus, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

The communication method may be performed by a terminal device or a chip/chip system.

In this embodiment of this application, the terminal apparatus may send the first indication information to the network apparatus, so that the network apparatus can send the first data information to the terminal apparatus after learning that the terminal apparatus has the capability of extending the radio frequency channel mapping data. When the first data information includes the first radio frequency channel mapping data, the terminal apparatus may perform communication or positioning by using the first radio frequency channel mapping data. When the first data information includes the scatterer information and/or the virtual transmit point information, the terminal apparatus may autonomously determine the second radio frequency channel mapping data based on the foregoing information, and perform positioning or communication by using the second radio frequency channel mapping data. When the first data information includes the first radio frequency channel mapping data, the scatterer information, and the virtual transmit point information, the terminal apparatus may autonomously determine the second radio frequency channel mapping data based on the scatterer information and the virtual transmit point information, and perform positioning or communication by using the first radio frequency channel mapping data and the second radio frequency channel mapping data. This manner can ensure that transmission of the radio frequency channel mapping data is more flexible, and can ensure compression quality and a size of the first data information by introducing the scatterer information and/or the virtual transmit point information, thereby ensuring that the radio frequency channel mapping data is efficiently transmitted.

With reference to the first aspect, in some implementations of the first aspect, the method further includes: sending first request information to the network apparatus, where the first request information is used to request the network apparatus to send at least one of the following: the first radio frequency channel mapping data, the scatterer information, and the virtual transmit point information.

In this embodiment of this application, the terminal apparatus may send the first request information to the network apparatus, so that the network apparatus can determine, based on the first request information and whether the terminal apparatus has the capability of extending the radio frequency channel mapping data, to send one or more of the first radio frequency channel mapping data, the scatterer information, or the virtual transmit point information to the terminal apparatus. This manner can make transmission of the radio frequency channel mapping data more flexible and diversified, to improve transmission efficiency of the radio frequency channel mapping data.

With reference to the first aspect, in some implementations of the first aspect, sending the first indication information to the network apparatus includes: when first response information is received, sending the first indication information to the network apparatus, where the first response information indicates that the network apparatus accepts the first request information.

Alternatively, after the first response information indicates that the network apparatus rejects the first request information, the terminal apparatus may not send the first indication information to the network apparatus.

In this embodiment of this application, after receiving the first response information, the terminal apparatus may send the first indication information to the network apparatus. This manner can prevent the terminal apparatus from still reporting the first indication information to the network apparatus when the network apparatus rejects the first request information, thereby avoiding a waste of communication resources.

With reference to the first aspect, in some implementations of the first aspect, the first radio frequency channel mapping data and the second radio frequency channel mapping data each include at least one of the following: measurement signal configuration information, geographical position information, a region start location, a channel status prediction value, or sensing quality information.

With reference to the first aspect, in some implementations of the first aspect, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

With reference to the first aspect, in some implementations of the first aspect, geographic regions corresponding to the first radio frequency channel mapping data and the second radio frequency channel mapping data are different.

Optionally, that the geographic region locations corresponding to the first radio frequency channel mapping data and the second radio frequency channel mapping data are different may be understood as: Locations in grid regions that correspond to the first radio frequency channel mapping data and the second radio frequency channel mapping data are different.

Optionally, the locations in the grid regions that correspond to the first radio frequency channel mapping data and the second radio frequency channel mapping data may include grid coordinates or grid codes.

Optionally, in the grid regions, the first radio frequency channel mapping data and the second radio frequency channel mapping data may include elements Rᵢ, which represent multipath components predicted by an environment at a hypothetical location grid (xᵢ, yᵢ, zᵢ), where i is a positive integer.

According to a second aspect, a communication method is provided, and the method includes: receiving first indication information sent by a terminal apparatus, where the first indication information indicates that the terminal apparatus has a capability of extending radio frequency channel mapping data; and sending first data information to the terminal apparatus based on the first indication information, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

The communication method may be performed by a network apparatus.

In this embodiment of this application, the network apparatus may send the first data information to the terminal apparatus based on the first indication information sent by the terminal apparatus. When the first data information includes the first radio frequency channel mapping data, this may help the terminal apparatus perform communication or positioning by using the first radio frequency channel mapping data. When the first data information includes the scatterer information and/or the virtual transmit point information, it may help the terminal apparatus autonomously determine the second radio frequency channel mapping data based on the foregoing information, and perform positioning or communication by using the second radio frequency channel mapping data. When the first data information includes the first radio frequency channel mapping data, the scatterer information, and the virtual transmit point information, the terminal apparatus may autonomously determine the second radio frequency channel mapping data based on the scatterer information and the virtual transmit point information, and perform positioning or communication by using the first radio frequency channel mapping data and the second radio frequency channel mapping data. This manner can ensure that transmission of the radio frequency channel mapping data is more flexible, and can ensure compression quality and a size of the first data information by introducing the scatterer information and/or the virtual transmit point information, thereby ensuring that the radio frequency channel mapping data is efficiently transmitted.

With reference to the second aspect, in some implementations of the second aspect, the method further includes: receiving first request information sent by the terminal apparatus, where the first request information is used to request a network apparatus to send at least one of the following: the first radio frequency channel mapping data, the scatterer information, and the virtual transmit point information; and sending second request information to a first network element based on the first request information, where the second request information is used to request the first network element to determine at least one of the following: the first radio frequency channel mapping data, the scatterer information, or the virtual transmit point information.

Optionally, the first network element is a sensing management function (sensing management function, SMF).

In this embodiment of this application, after receiving the first request information sent by the terminal apparatus, the network apparatus may send the second request information to the first network element. In this manner, a multi-level feedback mechanism is created, so that the network apparatus can determine a response result to the first request information based on a response result of the first network element to the second request information, to meet a requirement of the terminal apparatus.

With reference to the second aspect, in some implementations of the second aspect, the method further includes: receiving second response information sent by the first network element, where the second response information indicates at least one of the following: the first radio frequency channel mapping data, the scatterer information, or the virtual transmit point information; and sending first response information to the terminal apparatus based on the second response information, where the first response information indicates that the network apparatus accepts the first request information.

Alternatively, after the first response information indicates that the network apparatus rejects the first request information, the terminal apparatus may not send the first indication information to the network apparatus.

In this embodiment of this application, after receiving the second response information, the network apparatus may send the first response information to the network apparatus. In this manner, the network apparatus may determine the response result to the first request information based on the response result of the first network element to the second request information, to better meet a requirement of the terminal apparatus.

With reference to the second aspect, in some implementations of the second aspect, before sending the first data information to the terminal apparatus based on the first indication information, the method further includes: determining the first data information based on the second response information.

In this embodiment of this application, the network apparatus may determine content of the first data information based on content of the second response information. Specifically, the network apparatus chooses to send all or a part of the content of the second response information to the terminal apparatus. This manner helps provide a more accurate, efficient, and personalized communication service for the terminal apparatus, and also helps save network resources.

With reference to the second aspect, in some implementations of the second aspect, the second response information indicates the scatterer information and/or the virtual transmit point information, the first data information includes the first radio frequency channel mapping data, and the first data information further includes the scatterer information and/or the virtual transmit point information.

In this embodiment of this application, when the second response information received by the network apparatus from the first network element does not include the first radio frequency channel mapping data, the network apparatus may autonomously determine the first radio frequency channel mapping data, and send the first radio frequency channel mapping data, the scatterer information, and/or the virtual transmit point information to the terminal apparatus. In this way, the terminal apparatus can perform communication or positioning by directly using the first radio frequency channel mapping data, and can also autonomously determine the second radio frequency channel mapping data based on the scatterer information and/or the virtual transmit point information, to perform communication or positioning. This manner can ensure compression quality and a size of the first data information, thereby ensuring that the radio frequency channel mapping data is efficiently transmitted.

With reference to the second aspect, in some implementations of the second aspect, the first radio frequency channel mapping data and the second radio frequency channel mapping data each include at least one of the following: measurement signal configuration information, geographical position information, a region start location, a channel status prediction value, or sensing quality information.

With reference to the second aspect, in some implementations of the second aspect, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

With reference to the second aspect, in some implementations of the second aspect, geographic regions corresponding to the first radio frequency channel mapping data and the second radio frequency channel mapping data are different.

According to a third aspect, a communication method is provided, and the method includes: receiving second request information sent by a network apparatus, where the second request information is used to request a first network element to determine at least one of the following: first radio frequency channel mapping data, scatterer information, or virtual transmit point information; and
sending second response information to the network apparatus based on the second request information, where the second response information includes at least one of the following: the first radio frequency channel mapping data, the scatterer information, or the virtual transmit point information.

The communication method may be performed by the first network element, and the first network element may be an SMF.

In this embodiment of this application, the first network element may determine at least one of the following based on the second request information sent by the network apparatus: the first radio frequency channel mapping data, the scatterer information, or the virtual transmit point information, and send the determined content to the network apparatus by using the second response information. This can help the network apparatus send the first data information to the terminal apparatus, so that transmission of the radio frequency channel mapping data is more flexible, and to ensure that the radio frequency channel mapping data is efficiently transmitted.

With reference to the third aspect, in some implementations of the third aspect, the first radio frequency channel mapping data includes at least one of the following: measurement signal configuration information, geographical position information, a region start location, a channel status prediction value, or sensing quality information.

According to a fourth aspect, a communication apparatus is provided, and the apparatus includes a receiving unit and a sending unit. The sending unit is configured to send first indication information to a network apparatus, where the first indication information indicates that a terminal apparatus has a capability of extending radio frequency channel mapping data; and the receiving unit is configured to receive first data information sent by the network apparatus, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

With reference to the fourth aspect, in some implementations of the fourth aspect, the sending unit is further configured to send first request information to the network apparatus, where the first request information is used to request the network apparatus to send at least one of the following: the first radio frequency channel mapping data, the scatterer information, and the virtual transmit point information.

With reference to the fourth aspect, in some implementations of the fourth aspect, the sending unit is specifically configured to: when first response information is received, send the first indication information to the network apparatus, where the first response information indicates that the network apparatus accepts the first request information.

With reference to the fourth aspect, in some implementations of the fourth aspect, the first radio frequency channel mapping data and the second radio frequency channel mapping data each include at least one of the following: measurement signal configuration information, geographical position information, a region start location, a channel status prediction value, or sensing quality information.

With reference to the fourth aspect, in some implementations of the fourth aspect, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

With reference to the fourth aspect, in some implementations of the fourth aspect, geographic regions corresponding to the first radio frequency channel mapping data and the second radio frequency channel mapping data are different.

According to a fifth aspect, a communication apparatus is provided, and the apparatus includes a receiving unit and a processing unit. The receiving unit is configured to receive first indication information sent by a terminal apparatus, where the first indication information indicates that the terminal apparatus has a capability of extending radio frequency channel mapping data; and the processing unit is configured to send first data information to the terminal apparatus based on the first indication information, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

With reference to the fifth aspect, in some implementations of the fifth aspect, the receiving unit is further configured to receive first request information sent by the terminal apparatus, where the first request information is used to request a network apparatus to send at least one of the following: the first radio frequency channel mapping data, the scatterer information, and the virtual transmit point information; and the processing unit is further configured to send second request information to a first network element based on the first request information, where the second request information is used to request the first network element to determine at least one of the following: the first radio frequency channel mapping data, the scatterer information, or the virtual transmit point information.

With reference to the fifth aspect, in some implementations of the fifth aspect, the receiving unit is further configured to receive second response information sent by the first network element, where the second response information indicates at least one of the following: the first radio frequency channel mapping data, the scatterer information, or the virtual transmit point information; and the processing unit is further configured to send first response information to the terminal apparatus based on the second response information, where the first response information indicates that the network apparatus accepts the first request information.

With reference to the fifth aspect, in some implementations of the fifth aspect, the processing unit is further configured to determine the first data information based on the second response information.

With reference to the fifth aspect, in some implementations of the fifth aspect, the second response information indicates the scatterer information and/or the virtual transmit point information, the first data information includes the first radio frequency channel mapping data, and the first data information further includes the scatterer information and/or the virtual transmit point information.

With reference to the fifth aspect, in some implementations of the fifth aspect, the first radio frequency channel mapping data and the second radio frequency channel mapping data each include at least one of the following: measurement signal configuration information, geographical position information, a region start location, a channel status prediction value, or sensing quality information.

With reference to the fifth aspect, in some implementations of the fifth aspect, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

According to a sixth aspect, a communication apparatus is provided, and the apparatus includes: a receiving unit, configured to receive second request information sent by a network apparatus, where the second request information is used to request a first network element to determine at least one of the following: first radio frequency channel mapping data, scatterer information, or virtual transmit point information; and a processing unit, configured to send second response information to the network apparatus based on the second request information, where the second response information includes at least one of the following: the first radio frequency channel mapping data, the scatterer information, or the virtual transmit point information.

With reference to the sixth aspect, in some implementations of the sixth aspect, the first radio frequency channel mapping data includes at least one of the following: measurement signal configuration information, geographical position information, a region start location, a channel status prediction value, or sensing quality information.

According to a seventh aspect, a communication apparatus is provided, including at least one processor, configured to enable the apparatus to implement the method according to any one of the implementations of the first aspect to the third aspect.

With reference to the seventh aspect, in some implementations of the seventh aspect, the apparatus further includes a memory. The at least one processor is coupled to the memory, and is configured to read and execute instructions in the memory, to enable the apparatus to implement the method according to any one of the implementations of the first aspect to the third aspect.

With reference to the seventh aspect, in some implementations of the seventh aspect, the apparatus further includes a communication interface. The at least one processor is coupled to the communication interface, and is configured to control communication between the communication interface and another device.

With reference to the seventh aspect, in some implementations of the seventh aspect, the communication interface is a transceiver or an input/output interface.

According to an eighth aspect, a chip is provided. The chip includes a circuit. The circuit is configured to perform the method according to any one of the implementations of the first aspect to the third aspect.

With reference to the eighth aspect, in some implementations of the eighth aspect, the circuit is a processing circuit or a logic circuit.

With reference to the eighth aspect, in some implementations of the eighth aspect, the chip further includes an input/output interface, and the circuit is configured to control the input/output interface to implement communication with another device.

According to a ninth aspect, a computer-readable storage medium is provided. The computer-readable storage medium stores program code. When the computer program code is run on a computer, the computer is enabled to perform the method according to any one of the implementations of the first aspect to the third aspect.

According to a tenth aspect, a computer program product is provided. The computer product includes a computer program. When the computer program is run, a computer is enabled to perform the method according to any one of the implementations of the first aspect to the third aspect.

According to an eleventh aspect, a communication system is provided, and the communication system includes a terminal apparatus, a network apparatus, and a first network element. The communication system is configured to perform the following steps: The terminal apparatus sends first request information to the network apparatus, where the first request information is used to request the network apparatus to send at least one of the following: first radio frequency channel mapping data, scatterer information, and virtual transmit point information; the network apparatus sends second request information to the first network element based on the first request information, where the second request information is used to request the first network element to determine at least one of the following: the first radio frequency channel mapping data, the scatterer information, or the virtual transmit point information; the first network element sends second response information to the network apparatus based on the second request information, where the second response information includes at least one of the following: the first radio frequency channel mapping data, the scatterer information, or the virtual transmit point information; the network apparatus determines first data information based on the second response information, where the first data information includes at least one of the following: the first radio frequency channel mapping data, the scatterer information, or the virtual transmit point information; the terminal apparatus sends first indication information to the network apparatus, where the first indication information indicates that the terminal apparatus has a capability of extending radio frequency channel mapping data, and that the terminal apparatus has the capability of extending the radio frequency channel mapping data includes: The terminal apparatus determines second radio frequency channel mapping data based on the scatterer information and/or the virtual transmit point information; and the network apparatus sends the first data information to the terminal apparatus based on the first indication information.

### BRIEF DESCRIPTION OF DRAWINGS

FIG. 1A and FIG. 1B show monostatic integrated communication and sensing systems according to an embodiment of this application;
FIG. 2A and FIG. 2B show bi-static integrated communication and sensing systems according to an embodiment of this application;
FIG. 3A to FIG. 3D show approaches of generating radio frequency channel mapping data according to an embodiment of this application;
FIG. 4 shows a communication method according to an embodiment of this application;
FIG. 5 is a diagram of comparison between first radio frequency channel mapping data and second radio frequency channel mapping data at grid locations according to an embodiment of this application;
FIG. 6 shows another communication method according to an embodiment of this application;
FIG. 7A to FIG. 7C are diagrams of a relationship among a scatterer, a virtual transmit point, and radio frequency channel mapping data according to an embodiment of this application;
FIG. 8 is a diagram of a radio frequency channel mapping grid according to an embodiment of this application;
FIG. 9 shows another communication method according to an embodiment of this application;
FIG. 10 shows a communication apparatus according to an embodiment of this application; and
FIG. 11 shows another communication apparatus according to an embodiment of this application.

### DESCRIPTION OF EMBODIMENTS

The following describes technical solutions of this application with reference to accompanying drawings.

In the description of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists. In this application, at least one means one or more, and a plurality of means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, sequences, priorities, quantities, content, or the like of the described objects. In embodiments of this application, use of a prefix word, for example, an ordinal number used to distinguish described objects does not constitute any limitation on the described objects. For descriptions of the described objects, refer to the descriptions of the context in the claims or embodiments. The use of such a prefix word should not constitute any redundant limitation.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal apparatus (user equipment, UE) in embodiments of this application may be user equipment, an access terminal, a subscriber unit, a subscriber station a mobile station, a remote station, a remote terminal, a mobile device, a user terminal, a terminal, a wireless communication device, a user agent, or a user apparatus. A terminal apparatus may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal apparatus in a future 5G network, or a terminal apparatus in a future evolved public land mobile network (public land mobile network, PLMN). This is not limited in embodiments of this application.

A network apparatus in embodiments of this application may be a device configured to communicate with the terminal apparatus. The network apparatus may be an apparatus that is in a radio access network (radio access network, RAN) and that provides a wireless communication function for the terminal apparatus, and is referred to as a RAN device. For example, the network apparatus may be a base station (base station, BS), an evolved NodeB (evolved NodeB, eNodeB), a transmission reception point (transmission reception point, TRP), a next generation NodeB (next generation NodeB, gNB) in a 5G generation mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The network apparatus may be a macro base station, or may be a micro base station or an indoor base station, or may be a relay node, a donor node, or the like. A specific technology and a specific device form used by the network apparatus are not limited in embodiments of this application.

In another possible scenario, a plurality of RAN nodes cooperate to assist the terminal in implementing radio access, and different RAN nodes separately implement a part of functions of the base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a function of the network apparatus may alternatively be performed by a module (for example, a chip) in the network apparatus, or may be performed by a control subsystem including the function of the network apparatus. The control subsystem including the function of the network apparatus herein may be a control center in the foregoing application scenarios such as a smart grid, industrial control, intelligent transportation, and a smart city. The function of the terminal apparatus may alternatively be performed by a module (for example, a chip or a modem) in the terminal apparatus, or may be performed by an apparatus including the function of the terminal apparatus.

For ease of understanding of embodiments of this application, concepts and technologies used in embodiments of this application are first briefly described.
(1) Sensing: also referred to as wireless sensing, means emitting electromagnetic energy into space, and receiving waves reflected by an object in the space, to calculate information about the object, for example, a location, a direction, a height, a velocity, a size, a trajectory, and other parameters, and may detect internal and external shapes and structures of the object, that is, exploring transmission, echoes, reflection, and scattering of radio waves, to sense and better understand the physical world. As one of electromagnetic wave sensing technologies, the wireless sensing technology, due to its penetration capability and security, may serve as an important alternative technology for applications such as security inspection, concealed object detection, environment reconstruction, and monitoring.
(2) Associated scatterer (sensing reference unit, SRU): describes a situation in which different scattering points are associated or cooperate with each other during signal scattering or reflection. In communication systems, the associated scatterer may also affect channel characteristics, and therefore understanding mutual association of signals among scatterers is critical for optimizing communication links and system design.
(3) Virtual transmit point (virtual transmit point, VTP): A wireless network may include a plurality of transmit points (transmit points, TPs). These transmit points span a coverage area and may be divided into one or more coordination sets. These coordination sets may be referred to as VTPs.
(4) Radio frequency channel mapping map and radio frequency channel mapping data

In communication systems, environment information may be obtained by using wireless sensing technologies, to assist in channel prediction, positioning, beamforming, and the like, to improve communication service quality. A process of performing prediction by using the wireless sensing technologies to form the radio frequency channel mapping map is referred to as radio frequency mapping (radio frequency mapping, RF mapping). A map obtained through RF mapping is referred to as a radio frequency channel map, and data corresponding to the radio frequency channel map is referred to as radio frequency channel data.

In this application, the radio frequency channel map may correspond to a specific geographic region, and indicates geographical positions and region sizes of a plurality of regions obtained by dividing the geographic region. The geographic region may be a region within a specific range in the real physical world. For example, the geographic region may be represented by using a longitude, a latitude, and a height. For example, a starting point is denoted as (x₀, y₀, z₀), and the starting point is used as a reference for an outdoor scenario of 100 m x 100 m. The plurality of regions may be regions obtained by dividing the geographic region in a specific manner. For example, the geographic region of 100 m x 100 m is divided in a 1 m x 1 m manner, to obtain 100 x 100 regions, and each region is 1 m x 1 m.

It should be understood that in this application, regions (that is, the regions obtained by dividing the geographic region in a specific manner) related to the radio frequency channel map may have at least one of the following attributes: a shape, a size, an area, a geographical position, and the like. In this application, shapes, contours, sizes, radii, and areas of different regions are the same. Different regions have different geographical positions, and different regions do not overlap.

In a possible implementation, the shape of the region related to the radio frequency channel map may be a square, or another shape, such as a rectangle, a trapezoid, or a triangle. Alternatively, the shape of the region may be an irregular shape. This is not limited.

For example, the shape of the region may be defined by a protocol, or may be defined by a network apparatus. Shapes of regions defined by different network apparatuses may be the same or may be different. A same network apparatus may also define a plurality of shapes of regions. Similarly, the size, the radius, and the area of the region may also be defined by a protocol, or may be defined by a network apparatus. Sizes, radii, and areas of regions defined by different network apparatuses may be the same or may be different. A same network apparatus may also define a plurality of sizes of regions, a plurality of radii of regions, or a plurality of areas of regions.

In a possible implementation, a plurality of regions may be indexed (for example, numbered) to identify different regions.

In this application, the radio frequency channel map may include a plurality of grids, and the plurality of grids one-to-one correspond to a plurality of regions.

It should be understood that in this application, the grids related to the radio frequency channel map may have at least one of the following attributes: a shape, a size, an area, and the like. A shape of the grid may be consistent with a shape of the region corresponding to the grid. A size of the grid has a specific proportion to a size of the region corresponding to the grid. An area of the grid has a specific proportion to an area of the region corresponding to the grid. The size of the grid may also be described by another term, for example, a resolution.

The following describes technical problems to be resolved and technical solutions used in this application.

With continuous development of wireless sensing technologies, they are widely applied in various fields. The wireless sensing technology may mean that a device emits electromagnetic energy into the space, and a processing unit of the device (for example, a terminal apparatus or a network apparatus) may calculate information about an object (for example, a location, a direction, a height, a velocity, a size, a trajectory of the object, and other parameters) by using waves reflected by the object in the space, and detect an external shape and a structure of the object, to better understand the physical world in which the device is located.

In the communication field, the application of the wireless sensing technologies may enable integrated use of electromagnetic signals for communication and electromagnetic signals for sensing, to form an integrated communication and sensing system. In the integrated communication and sensing system, a network apparatus and a terminal apparatus are main devices for reconstructing a virtual environment, and quality sensed by the network apparatus and the terminal apparatus may be related to factors such as communication and sensing resources, space, time, a frequency band, power consumption, and a station. The space may include a quantity of beams, and can affect a sensing angle range; the time may include a sensing symbol length, and can affect sensing cross-range accuracy; the frequency band may include a sensing bandwidth, and can affect sensing range accuracy; the power consumption may include a sensing signal power, and can affect a sensing distance range; and the station may be a type of a device, for example, a network apparatus, a terminal apparatus, or a wireless terminal access device (customer premise equipment, CPE), and a communication capacity that the station may include can affect sensing fusion accuracy.

The integrated communication and sensing system may be classified into monostatic (monostatic), bi-static (bi-static), and multi-static (multi-static) integrated communication and sensing systems based on a case in which a transmitting end and a receiving end of a sensing signal are co-located or separated. The multi-static integrated communication and sensing system may be a hybrid system including the monostatic and bi-static integrated communication and sensing systems. It may be understood that the monostatic integrated communication and sensing system may also be referred to as single-station sensing, that is, sensing is performed by using one station. Similarly, the multi-static integrated communication and sensing system may also be referred to as multi-station sensing, that is, sensing is performed by using two or more stations. Similarly, the multi-static integrated communication and sensing system may be referred to as multi-station sensing.

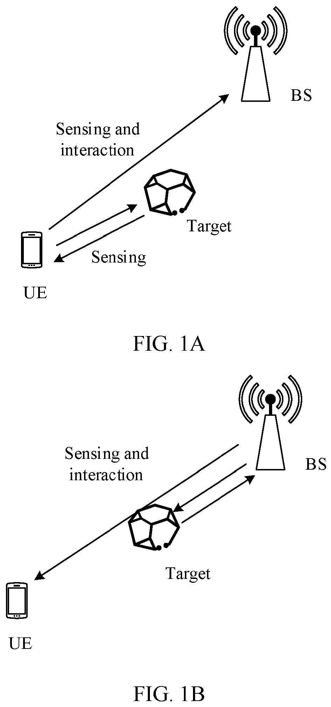

The following uses FIG. 1A to FIG. 2B as examples to describe the monostatic and bi-static integrated communication and sensing systems.

As shown in FIG. 1A and FIG. 1B, a transmitter and a receiver of the monostatic integrated communication and sensing system may be located at a same location (for example, located inside a same device), and a sensing signal may use a data payload, so that the transmitter and the receiver do not consume communication resources. In addition, because the sensing signal is sent and received by a same source, the monostatic integrated communication and sensing system is not affected by non-ideal factors such as synchronization, and has low sensing algorithm complexity, good estimation accuracy, and the like. In addition, because the sensing signal of the monostatic integrated communication and sensing system adopts a self-sending and self-receiving mode, and a detectable signal angle range of the sensing signal is closely related to an environmental incident angle. As the incident angle increases, a reflected signal of an object quickly fades. That is, an angle of view range for monostatic environment reconstruction is greatly affected by a material and a placement angle of a target object. In the monostatic integrated communication and sensing system, most components of an echo signal are single-bounce (single-bounce) rays, which satisfies radar assumption. When environmental space is inferred, a problem of an ill-conditioned equation is minor, and accuracy of inferring a spatial environment is high.

A scenario shown in FIG. 1A is an uplink scenario, that is, UE may include the receiver and the transmitter. After sensing a target, the UE may perform information interaction with a BS. A scenario shown in FIG. 1B is a downlink scenario, that is, the BS may include the receiver and the transmitter. After sensing the target, the BS may interact with the UE.

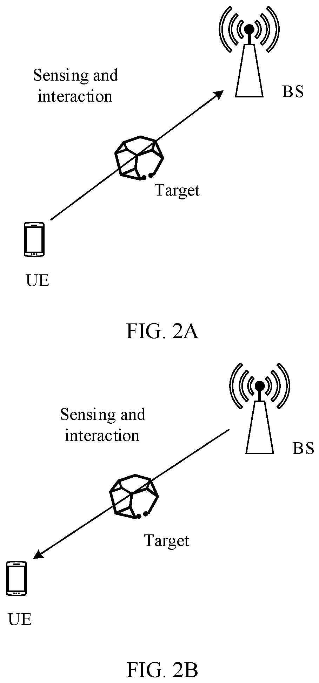

As shown in FIG. 2A and FIG. 2B, a transmitter and a receiver of the bi-static integrated communication and sensing system are located at different locations (for example, located in UE and a base station, respectively), and a sensing signal may use a dedicated pilot or a known signal, which means that a sensing function needs to consume communication resources. In addition, because the sensing signal is received and sent by different sources, the bi-static integrated communication and sensing system may be affected by non-ideal factors such as synchronization and phase noise, and has high sensing algorithm complexity, poor estimation accuracy, and the like, and a complex calibration algorithm is required for processing. Meanwhile, in a bi-static integrated communication and sensing architecture, because an echo signal has rich components, the echo signal has a large quantity of multi-bounce rays or a high bounce power. In city space that is prone to scattering, the large quantity of multi-bounce rays may cause an ill-conditioned equation, resulting in ghost space and an incorrect solution during virtual environment inferring, which greatly affects sensing accuracy.

A scenario shown in FIG. 2A is an uplink scenario, UE may include the transmitter, and the BS may include the receiver. That is, the UE may send a sensing signal, and the BS may receive the sensing signal to implement sensing of a target. A scenario shown in FIG. 2B is a downlink scenario, the BS may include the transmitter, and the UE may include the receiver. That is, the BS may send a sensing signal, and the UE receives the sensing signal to implement sensing of a target.

Both the monostatic integrated communication and sensing system and the bi-static integrated communication and sensing system are related to interaction between a terminal apparatus and the base station. Currently, the base station may send radio frequency channel mapping data to the terminal apparatus in an image compression manner. Such a data compression manner cannot ensure quality and a size of compressed data, leading to low efficiency in transmitting the radio frequency channel mapping data.

Embodiments of this application provide a communication method and a communication apparatus, which can ensure that transmission of radio frequency channel mapping data is more flexible, thereby ensuring that the radio frequency channel mapping data is efficiently transmitted.

It should be understood that in embodiments of this application, a BS and a network apparatus may be a same concept, and may be used interchangeably.

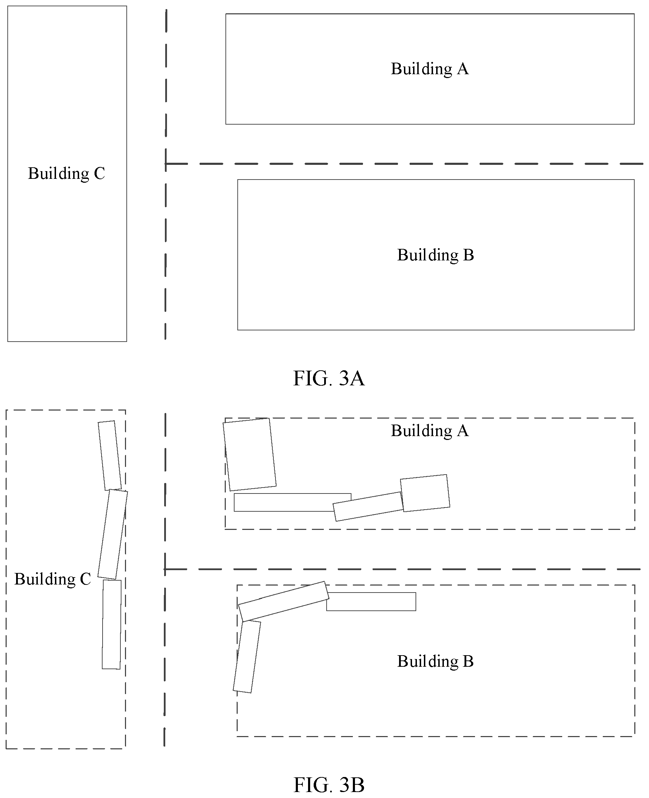

The following uses FIG. 3A to FIG. 3D as an example to describe obtaining and transmission manners of radio frequency channel mapping data.

In FIG. 3A, a dashed line may represent a road. In a physical environment shown in FIG. 3A, a plurality of communication and sensing nodes may exist, for example, a base station, a terminal apparatus, a transmission and reception point (transmission and reception point, TRP), or CPE. The communication and sensing node may emit an electromagnetic wave, a radar signal, or the like to obtain a reconstructed map, as shown in FIG. 3B. For example, the communication and sensing node may emit an electromagnetic wave or a radar signal, and receive an echo signal, to obtain scatterer information in a physical environment. In a possible case, each communication and sensing node may exchange the obtained scatterer information, to obtain a higher-accuracy environment reconstruction result within a larger range. As shown in FIG. 3B, any one of the plurality of communication and sensing nodes may divide a physical environment map into a plurality of grids, and each grid is used as a location. For ease of description, any one of the foregoing communication and sensing nodes is referred to as a target communication and sensing node.

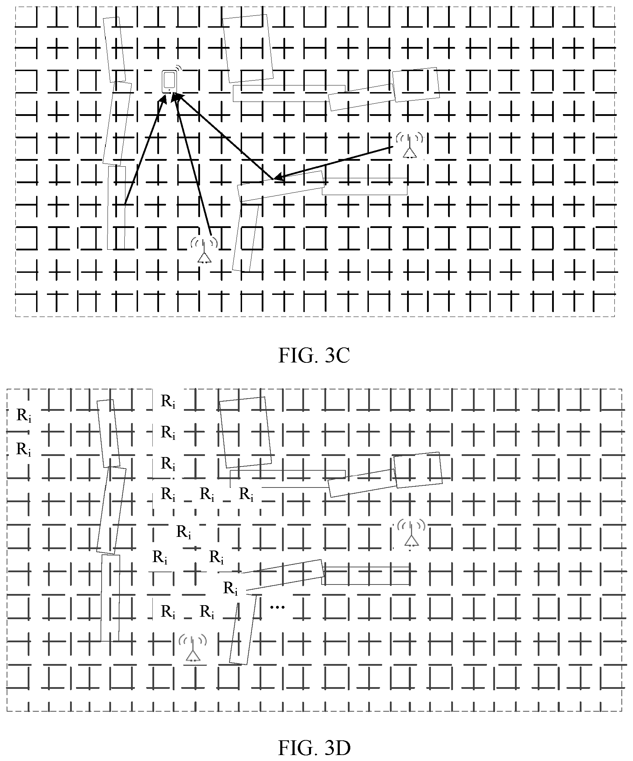

For example, the target communication and sensing node may divide the physical environment map into a plurality of rectangular regions, which are also referred to as grids, as shown in FIG. 3C. For another example, the target communication and sensing node may divide the physical environment map into different circular regions (not shown in the figure). For another example, the target communication and sensing node may divide the physical environment map into different hexagonal regions, which are also referred to as cellular areas (not shown in the figure). This is not specifically limited in this application. It may be understood that when the target communication and sensing node divides the physical environment map into a plurality of regions, a resolution of the areas may be predefined or preconfigured in a protocol. For example, the physical environment map may be divided into a plurality of regions based on a resolution such as every 5 m or 10 m. This is not specifically limited in this application. This specification is described by using an example in which the target communication and sensing node divides the physical environment map into a plurality of grids.

The target communication and sensing node may assume that a terminal apparatus exists at each location, and simulate a device transmission path from a base station to the terminal apparatus at each location, as shown in FIG. 3C. It may be understood that the transmission path may include a line-of-sight transmission path from the base station to the terminal apparatus, or may include a transmission path on which signals reach the terminal apparatus after being reflected by a scatterer. For example, the target communication and sensing node may obtain the transmission path from the base station to the terminal apparatus at each location by using an image line-of-sight tracking algorithm. The target communication and sensing node may obtain a channel status prediction value at each location through calculation by using a simulated transmission path, as shown in FIG. 3D. For example, the target communication and sensing node may calculate a channel status prediction value of a transmission path from the base station through an environment to the terminal apparatus at each location by using a ray tracing tool, an electromagnetic calculation tool, a simple simulation tool based on specular reflection, or the like. In addition, the target communication and sensing node may obtain information about a scatterer associated with each location, that is, information about a scatterer that passes through from the base station to the terminal apparatus at each location. In this way, the radio frequency channel mapping data may be obtained.

It should be noted that the foregoing manner of obtaining the radio frequency channel mapping data is merely an example, and does not constitute any limitation on the method for obtaining the radio frequency channel mapping data.

For content of the radio frequency channel mapping data in embodiments of this application, refer to Table 1. It may be understood that the radio frequency channel mapping data may be stored in an entity having a sensing function or a sensing fusion function, for example, a TRP, a terminal apparatus, a base station, an SMF entity in a core network device, or a location management function (location management function, LMF) entity. That is, after obtaining the radio frequency channel mapping data, the target communication and sensing node may send the radio frequency channel mapping data to the TRP, the terminal apparatus, the base station, or the SMF entity or the LMF entity in the core network device.

**Table 1: Example of radio frequency channel mapping data**

| Measurement signal configuration information (Reference signal config) | Grid setting information (Grid config) | Location information (Localization grid) | Channel status prediction value (Channel Status) | Associated scatterer information or associated scatterer group information (Association scatterer/sca tterer group) | Associated sensing quality (Sensing quality) |
|---|---|---|---|---|---|
| | {Start position (start) of a grid, resolution (grid resolution)} | (*Xᵢ, yᵢ, zᵢ*)/ Grid number (Grid ID i) | ${R}_{i} = ⋅ \left\{\begin{matrix}\left({Power}_{1}, {Delay}_{1}, {AOA}_{1}, {AOD}_{1}\right) , \\ \left({Power}_{2}, {Delay}_{2}, {AOA}_{2}, {AOD}_{2}\right) , \\ … , \\ \left({Power}_{k}, {Delay}_{k}, {AOA}_{k}, {AOD}_{k}\right)\end{matrix}\right\} .$ | Scatterer identifier (Scatterer ID) $\left\{\begin{matrix}{P}_{1} , {P}_{2} , … , \\ {P}_{n}\end{matrix}\right\}$ | *Sᵢ* |

As shown in Table 1, the radio frequency channel mapping data may include one or more of the measurement signal configuration information, the grid setting information, the location information, the channel status prediction value, the information about an associated scatterer or the information about an associated scatterer group, and the associated sensing quality. The following provides descriptions one by one.
1. The measurement signal configuration information may include one or more of a transmit and receive signal antenna port number (port), precoding information, and a subcarrier configuration.
   It may be understood that the measurement signal configuration information may be configuration information used by the communication and sensing node to send an electromagnetic wave when a reconstructed map is obtained, for example, the transmit/receive antenna port number, precoding information, and subcarrier configuration.
2. The location information indicates a geographical position. The location information may be indicated by using a relative position, for example, a distance or an angle relative to a base station, or may be indicated by using an absolute position, for example, longitude and latitude information. Alternatively, the location information may be indicated by using the grid number. In Table 1, the subscript i may be understood as the grid number.
3. The grid setting information indicates a start location of a grid and/or a resolution of a grid.
   The start location of a grid may indicate a start location during grid division, and may be indicated by using a relative position or an absolute position. The resolution of a grid may indicate a scale used for grid division. It may be understood that the resolution of a grid may alternatively not be indicated, and a default resolution is used.
4. The channel status prediction value may be indicated by using multipath information, for example, indicated by using a power delay profile (power delay profile, PDP) or a channel impulse response (channel impulse response, CIR). The channel status prediction value is calculated by the target communication and sensing node by using the transmission path from the base station to the terminal apparatus at each location.
5. The associated scatterer information or the associated scatterer group information is information about a scatterer or a scatterer group associated with a transmission path when a channel status prediction value of a grid is estimated. In a possible case, the scatterer information or the scatterer group information may include one or more of the scatterer identifier and location information of a scatterer. The location information of a scatterer may be indicated by using coordinate information of a grid, or may be indicated by using an absolute position or a relative position. Optionally, the scatterer information or the scatterer group information may further include obtaining time information, for example, a timestamp, which represents that the communication and sensing node in FIG. 3B senses the scatterer or the scatterer group at the timestamp.
6. The associated sensing quality is sensing quality corresponding to a grid, and is equivalent to sensing accuracy quality of a service. Optionally, the sensing quality corresponding to a grid may have an initial value. The initial value may be set to a preset lowest value, or may be determined based on information about time of obtaining the scatterer information or the scatterer group information. For example, a larger time difference between the obtaining time information and current time indicates a lower initial value, and a smaller time difference between the obtaining time information and the current time indicates a higher initial value. The associated sensing quality may be updated in a subsequent measurement process.

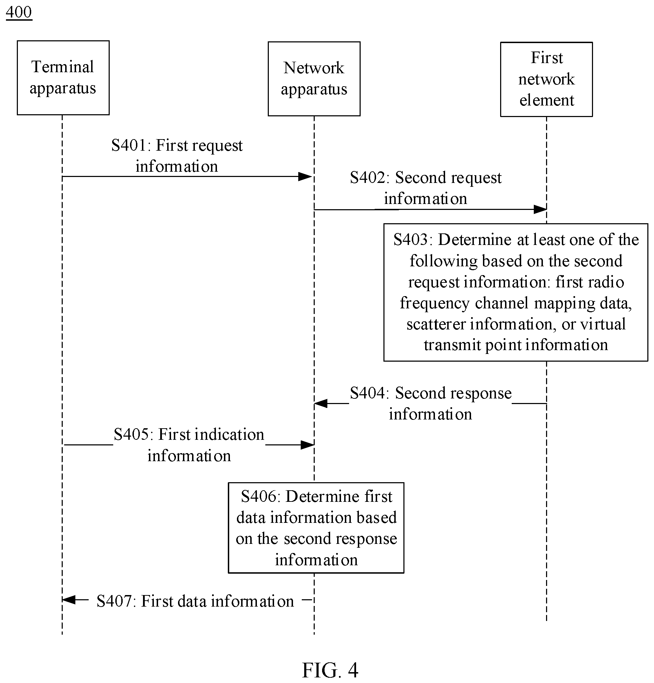

The following describes, with reference to FIG. 4 to FIG. 8, a communication method provided in an embodiment of this application.

FIG. 4 shows a communication method according to an embodiment of this application. The method 400 may be applied to the integrated communication and sensing system shown in FIG. 2A and FIG. 2B or FIG. 3A to FIG. 3D, and the method 400 may include steps S401 to S407.

S401: A terminal apparatus sends first request information to a network apparatus.

For example, the first request information is used to request the network apparatus to send at least one of the following to the terminal apparatus: first radio frequency channel mapping data, scatterer information, and virtual transmit point information. The scatterer information and/or the virtual transmit point information are/is used by the terminal apparatus to determine second radio frequency channel mapping data.

Optionally, the first radio frequency channel mapping data and the second radio frequency channel mapping data may include elements Rᵢ, which represent multipath components predicted by an environment at a hypothetical location grid (xᵢ, yᵢ, zᵢ), where i is a positive integer.

Optionally, content of the first radio frequency channel mapping data and the second radio frequency channel mapping data may be shown in Table 1. For example, the first radio frequency channel mapping data and the second radio frequency channel mapping data may include at least one of the following: measurement signal configuration information, geographical position information, a region start location, a channel status prediction value, or sensing quality information.

In an implementation, geographic regions corresponding to the first radio frequency channel mapping data and the second radio frequency channel mapping data are different.

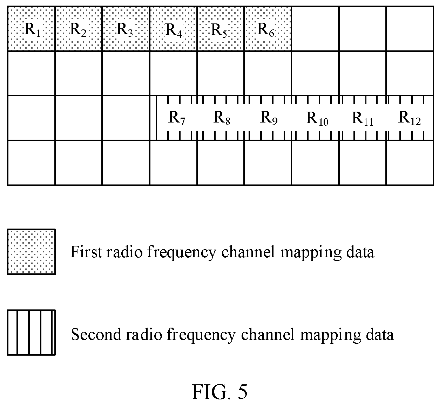

Optionally, that the geographic regions corresponding to the first radio frequency channel mapping data and the second radio frequency channel mapping data are different may be understood as: Grid regions corresponding to the first radio frequency channel mapping data and the second radio frequency channel mapping data are different. For example, as shown in FIG. 5, a radio frequency channel map is divided into a plurality of grid regions. A grid region corresponding to the first radio frequency channel mapping data is a region occupied by elements R₁ to R₆, and a grid region corresponding to the second radio frequency channel mapping data is a region occupied by elements R₇ to R₁₂. It can be learned from FIG. 5 that locations (coordinates) of the grid regions corresponding to the first radio frequency channel mapping data and the second radio frequency channel mapping data are different.

S402: The network apparatus sends second request information to a first network element based on the first request information.

For example, the second request information is used to request the first network element to determine at least one of the following: the first radio frequency channel mapping data, the scatterer information, or the virtual transmit point information. In this way, a multi-level feedback mechanism is created, so that the network apparatus can determine a response result to the first request information based on a response result of the first network element to the second request information, to meet a requirement of the terminal apparatus.

Optionally, the first network element may be an SMF.

Optionally, the scatterer information may indicate information about N independent scatterers, where N is a positive integer. Further, the scatterer information may indicate at least one of the following corresponding to the information about N independent scatterers: station information (for example, a sensing link number, a transmit or receive station number, and a station configuration), a scatterer number, coordinates (x, y, z), an angle (for example, an angle of arrival and/or an emission angle of a sensing signal), reliability of a measured scatterer, and a received power and a velocity of a sensing signal.

Optionally, the scatterer information may indicate information about P independent scatterer groups. Each scatterer group may include K scatterers with a high parameter correlation. P and K are positive integers. For example, when a correlation (for example, a difference, a covariance, or a Euclidean distance) between a scatterer 1 and a scatterer 2 is greater than a threshold, it may be considered that the scatterer 1 and the scatterer 2 belong to a same scatterer group. Further, the scatterer information may indicate at least one of the following corresponding to the information about P scatterer groups: station information, a scatterer group number, central location coordinates (x, y, z), a size of the scatterer group, a normal direction, vertex central location coordinates (x, y, z), an attribute, a category, or a velocity. For one scatterer group, there is only one central location, and there may be a plurality of vertex central locations. A rough contour of the scatterer group may be determined by using the plurality of vertex central locations.

S403: The first network element determines at least one of the following based on the second request information: the first radio frequency channel mapping data, the scatterer information, or the virtual transmit point information.

S404: The first network element sends second response information to the network apparatus.

For example, the second response information includes at least one of the following: the first radio frequency channel mapping data, the scatterer information, or the virtual transmit point information.

S405: The terminal apparatus sends first indication information to the network apparatus.

For example, the first indication information indicates that the terminal apparatus has a capability of extending radio frequency channel mapping data. That the terminal apparatus has the capability of extending the radio frequency channel mapping data includes: The terminal apparatus determines the second radio frequency channel mapping data based on the scatterer information and/or the virtual transmit point information.

Optionally, step S405 and step S401 may be performed together. That is, the terminal apparatus may send the first request information and the first indication information in step S401. In this case, step S405 may not be performed again.

Optionally, when receiving first response information sent by the network apparatus, the terminal apparatus may send the first indication information to the network apparatus, where the first response information indicates that the network apparatus accepts the first request information. In this way, application of the first response information can prevent the terminal apparatus from still reporting the first indication information to the network apparatus when the network apparatus rejects the first request information, thereby avoiding a waste of communication resources.

Optionally, the first indication information may further indicate at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

The channel status prediction value may also indicate a data type of the radio frequency channel mapping data, and may specifically include at least one of the following: an angle delay profile (angles delay spread, ADP), a PDP, a CIR, channel state information (channel state information, SCI), and a pilot measurement result. Further, the SCI may be, for example, a CSI-RS resource indicator (CSI-RS resource indicator, CRI), a rank indicator (rank indicator, RI), a channel quality indicator (channel quality indicator, CQI), a precoding matrix indicator (precoding matrix indicator, PMI), or a layer indicator (layer indicator, LI). The region start location may be a start location corresponding to a grid number. The region location spacing between the first radio frequency channel mapping data and the second radio frequency channel mapping data may be a location spacing between the first radio frequency channel mapping data and the second radio frequency channel mapping data in a grid region. The available coordinates corresponding to the second radio frequency channel mapping data may be available grid coordinates or grid codes.

For example, as shown in FIG. 5, the first indication information may further indicate a start location (a 1^{st} row and a 1^{st} column) of the element R₁ in the first radio frequency channel mapping data in a grid and a start location (a 3^{rd} row and a 4^{th} column) of the element R₇ in the second radio frequency channel mapping data in the grid.

For another example, as shown in FIG. 5, the first indication information may further indicate that the location spacing between the first radio frequency channel mapping data and the second radio frequency channel mapping data in the grid is 15.

For another example, as shown in FIG. 5, the first indication information may further indicate that the available coordinates corresponding to the second radio frequency channel mapping data are from the 4^{th} column to a 9^{th} column in the 3^{rd} row of the grid.

S406: The network apparatus determines first data information based on the second response information.

In a possible implementation, content indicated by the first data information may be completely the same as content of the second response information. That is, the network apparatus plays an information forwarding role.

For example, when the second response information includes the first radio frequency channel mapping data, the first data information may include the first radio frequency channel mapping data.

For another example, when the second response information includes the scatterer information and/or the virtual transmit point information, the first data information may include the scatterer information and/or the virtual transmit point information.

For another example, when the second response information includes the first radio frequency channel mapping data, and the second response information further includes the scatterer information and/or the virtual transmit point information, the first data information may include the first radio frequency channel mapping data, the scatterer information, and/or the virtual transmit point information.

In a possible implementation, content indicated by the first data information may be different from content of the second response information. That is, the network apparatus may autonomously determine the content of the first data information. This helps provide a more accurate, efficient, and personalized communication service for the terminal apparatus, and also helps save network resources.

For example, when the second response information includes the scatterer information and/or the virtual transmit point information, the first data information may include the first radio frequency channel mapping data, and the scatterer information and/or the virtual transmit point information. That is, the network apparatus determines the first radio frequency channel mapping data.

For another example, when the second response information includes the first radio frequency channel mapping data, and the second response information further includes the scatterer information and/or the virtual transmit point information, the first data information may include only the scatterer information and/or the virtual transmit point information. That is, the network apparatus may autonomously determine not to send the first radio frequency channel mapping data to the terminal apparatus.

S407: The network apparatus sends the first data information to the terminal apparatus based on the first indication information.

After receiving the first data information, the terminal apparatus may perform different processing based on the content of the first data information.

In an implementation, when the first data information includes the first radio frequency channel mapping data, the terminal apparatus may perform communication or positioning by using the first radio frequency channel mapping data.

In an implementation, when the first data information includes the scatterer information and/or the virtual transmit point information, the terminal apparatus may determine the second radio frequency channel mapping data based on the foregoing information, and perform communication or positioning by using the second radio frequency channel mapping data.

In an implementation, when the first data information includes the first radio frequency channel mapping data, and the first data information further includes the scatterer information and/or the virtual transmit point information, the terminal apparatus may determine the second radio frequency channel mapping data based on the scatterer information and/or the virtual transmit point information, and perform communication or positioning by using the first radio frequency channel mapping data and the second radio frequency channel mapping data.

In this embodiment of this application, the terminal apparatus may send the first indication information to the network apparatus, so that the network apparatus can send the first data information to the terminal apparatus after learning that the terminal apparatus has the capability of extending the radio frequency channel mapping data. When the first data information includes the first radio frequency channel mapping data, the terminal apparatus may perform communication or positioning by using the first radio frequency channel mapping data. When the first data information includes the scatterer information and/or the virtual transmit point information, the terminal apparatus may autonomously determine the second radio frequency channel mapping data based on the foregoing information, and perform positioning or communication by using the second radio frequency channel mapping data. When the first data information includes the first radio frequency channel mapping data, the scatterer information, and the virtual transmit point information, the terminal apparatus may autonomously determine the second radio frequency channel mapping data based on the scatterer information and the virtual transmit point information, and perform positioning or communication by using the first radio frequency channel mapping data and the second radio frequency channel mapping data. This manner can ensure that transmission of the radio frequency channel mapping data is more flexible, and can ensure compression quality and a size of the first data information by introducing the scatterer information and/or the virtual transmit point information, thereby ensuring that the radio frequency channel mapping data is efficiently transmitted.

It should be understood that, in embodiments of this application, a function of the network apparatus may alternatively be performed by a module (for example, a chip) in the network apparatus, or may be performed by a control subsystem including the function of the network apparatus. A function of the terminal apparatus may alternatively be performed by a module (for example, a chip or a modem) in the terminal apparatus, or may be performed by an apparatus including the function of the terminal apparatus.

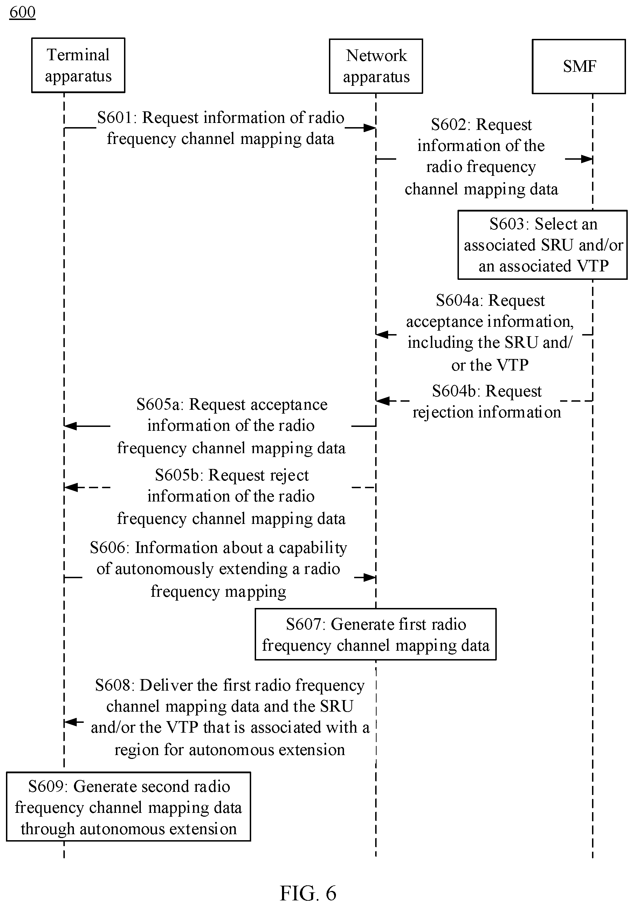

FIG. 6 shows another communication method according to an embodiment of this application. The method 600 may be specific descriptions of steps in the method 400. The method 600 may include steps S601 to S609.

S601: A terminal apparatus sends request information of radio frequency channel mapping data to a network apparatus.

For example, the request information of the radio frequency channel mapping data indicates the network apparatus to send at least one of the following to the terminal apparatus: first radio frequency channel mapping data, and an SRU or a VTP, and the request information of the radio frequency channel mapping data may be the first request information in the method 400.

Optionally, the request information of the radio frequency channel mapping data may further include: location information of the terminal apparatus and/or an identifier of the terminal apparatus, to help the network apparatus subsequently send the first radio frequency channel mapping data to the terminal apparatus.

Optionally, specific content of the first radio frequency channel mapping data may be shown in Table 1.

S602: The network apparatus sends the request information of the radio frequency channel mapping data to an SMF.

For example, the request information of the radio frequency channel mapping data may be used to request the SMF to select the SRU and/or the VTP, and the request information of the radio frequency channel mapping data may be the second request information in the method 400.

S603: The SMF selects an associated SRU and/or an associated VTP.

S604a: The SMF sends request acceptance information to the network apparatus.

For example, the request acceptance information may include the associated SRU and/or the associated VTP selected by the SMF, and the request acceptance information may be the second response information in the method 400.

Alternatively, when the SMF cannot select the associated SRU and/or the associated VTP, step S604b may be performed. That is, the SMF sends request rejection information to the network apparatus.

S605a: The network apparatus sends the request acceptance information of the radio frequency channel mapping data to the terminal apparatus.

For example, after receiving the request acceptance information sent by the SMF, the network apparatus may send the request acceptance information of the radio frequency channel mapping data to the terminal apparatus, and the information may correspond to the first response information in the method 400.

Alternatively, when the network apparatus receives the request rejection information sent by the SMF, step S605b may be performed. That is, the request rejection information of the radio frequency channel mapping data is sent to the terminal apparatus.

S606: The network apparatus receives information that is about a capability of autonomously extending a radio frequency mapping and that is sent by the terminal apparatus.

For example, the information about the capability of autonomously extending the radio frequency mapping may indicate that the terminal apparatus has a capability of extending the radio frequency channel mapping data, and the information about the capability of autonomously extending the radio frequency mapping may be the first indication information in the method 400. Alternatively, the information about the capability of autonomously extending the radio frequency mapping may indicate that the terminal apparatus does not have the capability of extending the radio frequency channel mapping data.

For example, that the terminal apparatus has the capability of extending the radio frequency channel mapping data includes: The terminal apparatus determines second radio frequency channel mapping data based on the scatterer information and/or the virtual transmit point information.

Optionally, geographic regions corresponding to the first radio frequency channel mapping data and the second radio frequency channel mapping data are different.

Optionally, the information about the capability of autonomously extending the radio frequency mapping may further include a data type of the radio frequency channel mapping data, a data range and a configuration for generating the radio frequency channel mapping data, and a range and a configuration for autonomously extending the radio frequency mapping.

Optionally, the data type of the radio frequency channel mapping data may include at least one of the following: an ADP, a PDP, a CIR, SCI (for example, a CRI, an RI, a CQI, a PMI, or an LI) information, and a pilot measurement result.

Optionally, the data range and the configuration for the radio frequency channel mapping data may include at least one of the following: a grid setting and a grid spacing that correspond to the first radio frequency channel mapping data and the second radio frequency channel mapping data, and the grid setting may be a grid start location and a grid resolution that are related to a grid number.

Optionally, the range and the configuration for autonomously extending the radio frequency mapping may include a grid setting used when the terminal apparatus uses the SRU and/or the VTP to autonomously extend the second radio frequency channel mapping data, and the grid setting includes available relative coordinates, a grid code, or a grid resolution.

S607: The network apparatus generates the first radio frequency channel mapping data.

S608: The network apparatus sends, to the terminal apparatus, the first radio frequency channel mapping data and the SRU and/or the VTP that is associated with a region for autonomous extension.

S609: The terminal apparatus generates the second radio frequency channel mapping data through autonomous extension.

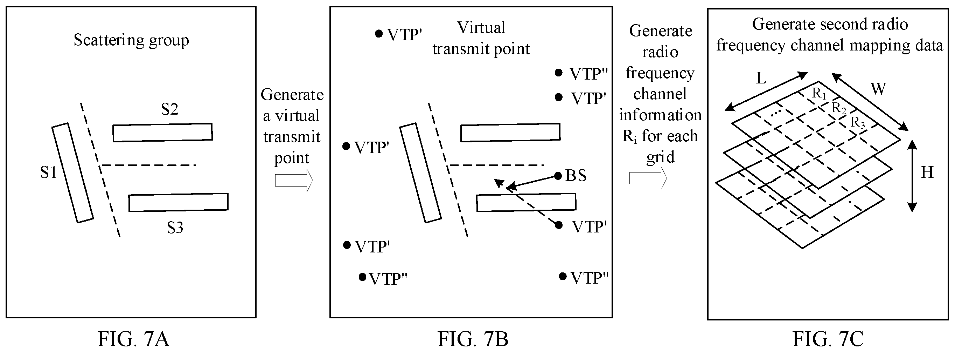

For example, as shown in FIG. 7A to FIG. 7C, the terminal apparatus may generate, based on scatterer information shown in FIG. 7A and VTP information shown in FIG. 7B through autonomous extension in a corresponding grid region, the second radio frequency channel mapping data shown in FIG. 7C. In FIG. 7A, S1 to S3 may represent buildings, and each building may correspond to one scatterer group. In FIG. 7B, a VTP' and the network apparatus may be in a mirror-symmetrical relationship, and a VTP" may represent a virtual transmit point obtained by performing mirror symmetry twice by the network apparatus.

After receiving the first radio frequency channel mapping data and generating the second radio frequency channel mapping data through autonomous extension, the terminal apparatus may perform communication or positioning by using the first radio frequency channel mapping data and the second radio frequency channel mapping data.

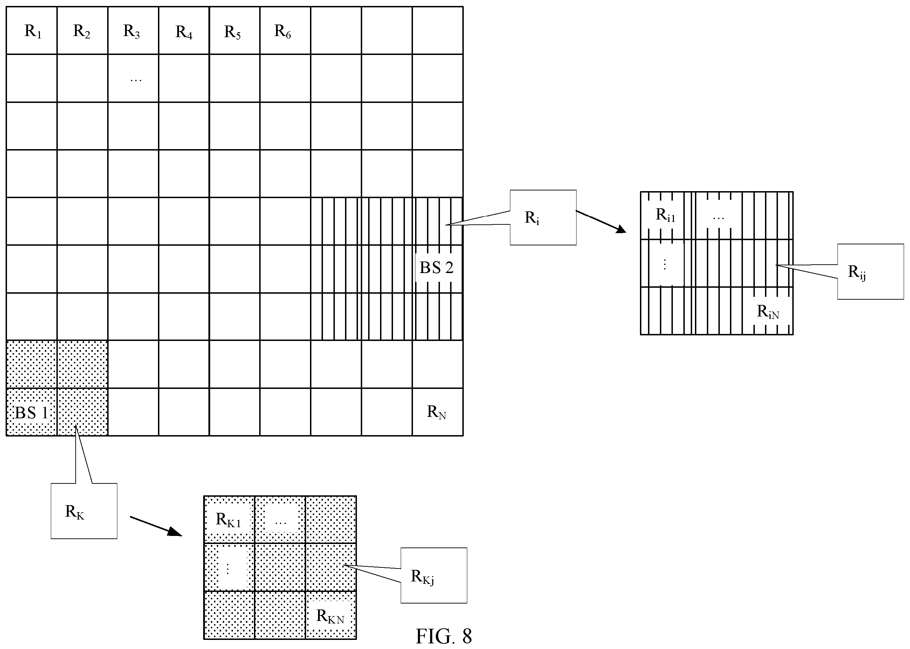

In a possible implementation, when a communication system includes a plurality of terminal apparatuses, and the plurality of terminal apparatuses have the capability of extending the radio frequency channel mapping data, each terminal apparatus may generate corresponding second radio frequency channel mapping data through autonomous extension based on SRU information and/or VTP information sent by the network apparatus. For example, as shown in FIG. 8, in a scenario in which two terminal apparatuses, that is, a terminal apparatus 1 and a terminal apparatus 2, are included, and the two terminal apparatuses both have the capability of extending the radio frequency channel mapping data, each terminal apparatus may generate the second radio frequency channel mapping data through autonomous extension based on the SRU information and/or the VTP information sent by the network apparatus. A grid with dots in FIG. 8 is a mapping region of radio frequency data associated with a network apparatus 1, and a grid with vertical lines in FIG. 8 is a mapping region of radio frequency data associated with a network apparatus 2. A process in which the terminal apparatus 1 and the terminal apparatus 2 generate the second radio frequency channel mapping data through autonomous extension may be understood as that the grid with dots and the grid with vertical lines are continuously refined to obtain Rₖⱼ and Rᵢⱼ. k, j, and i are all positive integers.

Optionally, in the method 600, if the terminal apparatus does not report the information about the capability of autonomously extending the radio frequency mapping in step S606, or the reported information about the capability of autonomously extending the radio frequency mapping indicates that the terminal apparatus does not have the capability of extending the radio frequency channel mapping data, the network apparatus may send only the first radio frequency channel mapping data in step S608. In this case, the terminal apparatus may perform communication or positioning by using only the first radio frequency channel mapping data.

In a possible implementation, in consideration of a balance between operation overheads and transmission overheads, the network apparatus may transmit Rₐ corresponding to the first radio frequency channel mapping data in a part of grid regions, and transmit the SRU information and/or the VTP information in another part of grid regions, to ensure that the terminal apparatus can generate, in the another part of grid regions through extension based on the SRU information and/or the VTP information, R_{b} corresponding to the second radio frequency channel mapping data. Both a and b are positive integers, and values of a and b are different.

In this embodiment of this application, after determining that the terminal apparatus has the capability of autonomously extending the radio frequency mapping, the network apparatus may send, to the terminal apparatus, the first radio frequency channel mapping data and the SRU and/or the VTP that is associated with the region for autonomous extension, to help the terminal apparatus generate the second radio frequency channel mapping data through autonomous extension. In this way, the terminal apparatus can perform positioning or communication by using the first radio frequency channel mapping data and the second radio frequency channel mapping data. This manner can ensure that transmission of the radio frequency channel mapping data is more flexible, and can ensure compression quality and a size of transmitted data by introducing the SRU and/or the VTP, thereby ensuring that the radio frequency channel mapping data is efficiently transmitted.

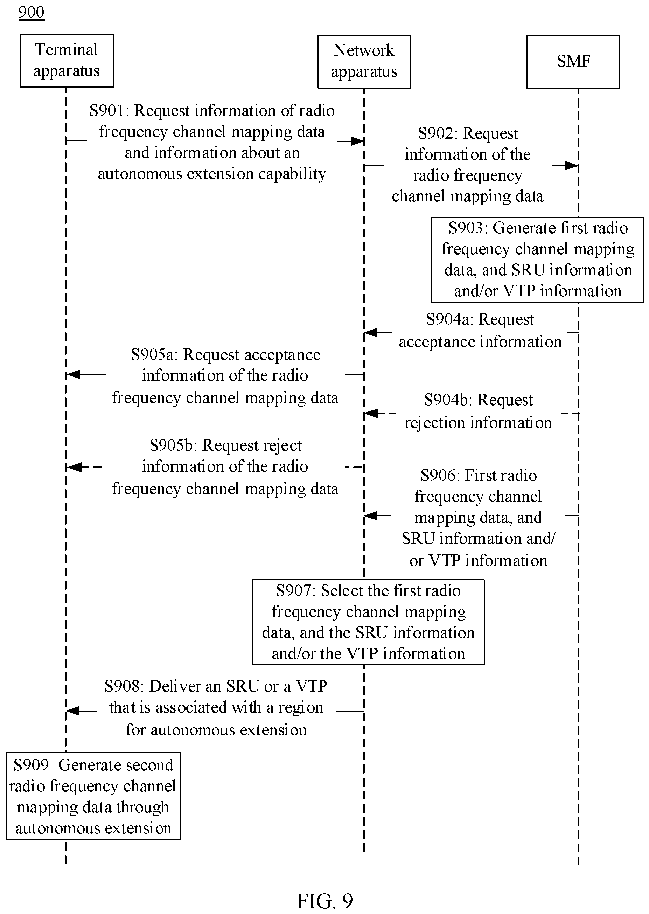

FIG. 9 shows another communication method according to an embodiment of this application. The method 900 may be specific descriptions of steps in the method 400. The method 900 may include steps S901 to S909.

S901: A terminal apparatus sends request information of radio frequency channel mapping data and information about an autonomous extension capability to a network apparatus.

For example, the request information of the radio frequency channel mapping data indicates the network apparatus to send at least one of the following to the terminal apparatus: first radio frequency channel mapping data, and an SRU or a VTP, and the request information of the radio frequency channel mapping data may be the first request information in the method 400. The information about the autonomous extension capability may indicate that the terminal apparatus has a capability of extending the radio frequency channel mapping data, and the information about the autonomous extension capability may be the first indication information in the method 400. Alternatively, the information about the autonomous extension capability may indicate that the terminal apparatus does not have the capability of extending the radio frequency channel mapping data.

For example, that the terminal apparatus has the capability of extending the radio frequency channel mapping data includes: The terminal apparatus determines second radio frequency channel mapping data based on scatterer information and/or virtual transmit point information.

Optionally, geographic regions corresponding to the first radio frequency channel mapping data and the second radio frequency channel mapping data are different.

Optionally, the request information of the radio frequency channel mapping data may further include: location information of the terminal apparatus and/or an identifier of the terminal apparatus, to help the network apparatus subsequently send the first radio frequency channel mapping data to the terminal apparatus.

Optionally, the information about the autonomous extension capability further includes a data type of the radio frequency channel mapping data, a data range and a configuration for generating the radio frequency channel mapping data, and a range and a configuration for autonomously extending a radio frequency mapping.

Optionally, the data type of the radio frequency channel mapping data may include at least one of the following: an ADP, a PDP, a CIR, SCI (for example, a CRI, an RI, a CQI, a PMI, or an LI) information, and a pilot measurement result.

Optionally, the data range and the configuration for the radio frequency channel mapping data may include a grid setting and a grid spacing that correspond to the first radio frequency channel mapping data and the second radio frequency channel mapping data, and the grid setting may be a grid start location and a grid resolution that are related to a grid number.

Optionally, the range and the configuration for autonomously extending the radio frequency mapping may include a grid setting used when the terminal apparatus uses the SRU and/or the VTP to autonomously extend the second radio frequency channel mapping data, and the grid setting includes available relative coordinates, a grid code, or a grid resolution.

S902: The network apparatus sends the request information of the radio frequency channel mapping data to an SMF.

For example, the request information of the radio frequency channel mapping data may be used to request the SMF to send the first radio frequency channel mapping data to the network apparatus and select an associated SRU and/or an associated VTP, and the request information of the radio frequency channel mapping data may correspond to the second request information in the method 400.

S903: The SMF generates the first radio frequency channel mapping data, and SRU information and/or VTP information.

S904a: The SMF sends request acceptance information to the network apparatus.

Alternatively, if the SMF cannot generate the first radio frequency channel mapping data, and the SRU information and/or the VTP information, step S904b may be performed. That is, the SMF sends request rejection information to the network apparatus.

S905a: The network apparatus sends the request acceptance information of the radio frequency channel mapping data to the terminal apparatus.

For example, after receiving the request acceptance information sent by the SMF, the network apparatus may send the request acceptance information of the radio frequency channel mapping data to the terminal apparatus, and the request acceptance information of the radio frequency channel mapping data may correspond to the first response information in the method 400.

Alternatively, if the network apparatus receives the request rejection information of the SMF, step S905b may be performed. That is, the network apparatus sends the request rejection information of the radio frequency channel mapping data to the terminal apparatus.

S906: The SMF sends the first radio frequency channel mapping data, and the SRU information and/or the VTP information to the network apparatus.

S907: The network apparatus selects the first radio frequency channel mapping data, and the SRU information and/or the VTP information.

Optionally, the network apparatus may select all or a part of information from the foregoing information to send all or the part of information to the terminal apparatus.

S908: The network apparatus sends, to the terminal apparatus, SRU information and/or VTP information that is associated with a region for autonomous extension.

Alternatively, the network apparatus may send the first radio frequency channel mapping data, and the SRU information and/or the VTP information to the terminal apparatus.

S909: The terminal apparatus generates the second radio frequency channel mapping data through autonomous extension.

For example, the terminal apparatus may generate the second radio frequency channel mapping data through autonomous extension based on the SRU information and/or the VTP information, and perform communication or positioning by using the second radio frequency channel mapping data. In another implementation, in step S909, when additionally receiving the first radio frequency channel mapping data, the terminal apparatus may perform communication or positioning by using the first radio frequency channel mapping data and the second radio frequency channel mapping data.

In this embodiment of this application, after determining that the terminal apparatus has the capability of extending the radio frequency channel mapping data, the network apparatus may send, to the terminal apparatus, the SRU and/or the VTP that is associated with the region for autonomous extension, to help the terminal apparatus generate the second radio frequency channel mapping data through autonomous extension. This can ensure compression quality and a size of transmitted data by introducing the SRU and/or the VTP, thereby ensuring that the radio frequency channel mapping data is efficiently transmitted.

An embodiment of this application further provides an apparatus configured to implement any one of the foregoing methods. The apparatus includes corresponding units configured to implement steps performed in any one of the foregoing methods.

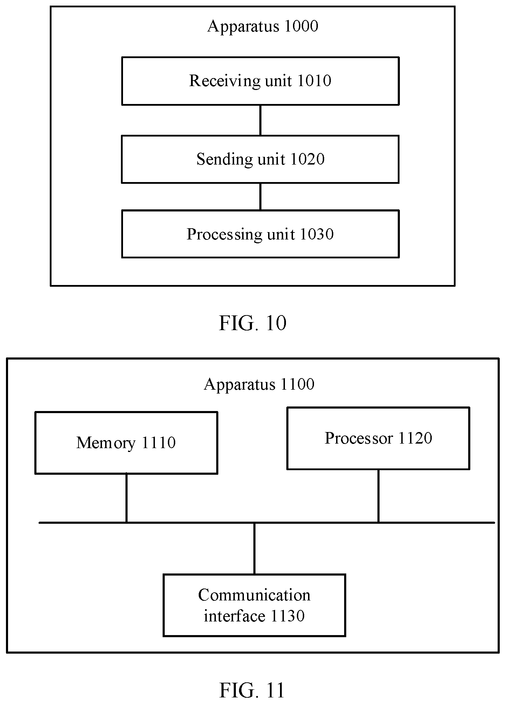

FIG. 10 is a diagram of a communication apparatus 1000 according to an embodiment of this application. The apparatus 1000 may include a receiving unit 1010, a sending unit 1020, and a processing unit 1030. The receiving unit 1010 is configured to receive instructions and/or data, and the sending unit 1020 is configured to send the instructions and/or data. The receiving unit 1010 and the sending unit 1020 may also be referred to as a communication interface, a communication unit, or a transceiver unit. The processing unit 1030 is configured to perform data processing, so that the apparatus 1000 implements the foregoing communication methods.

Optionally, the apparatus 1000 further includes a storage unit, configured to: implement a corresponding storage function, and store corresponding instructions and/or data.

In a design, the apparatus 1000 may perform actions performed by the terminal apparatus in the foregoing method embodiments.

In an embodiment, the apparatus 1000 includes a receiving unit 1010 and a sending unit 1020. The sending unit 1020 is configured to send first indication information to a network apparatus, where the first indication information indicates that the terminal apparatus has a capability of extending radio frequency channel mapping data; and the receiving unit 1010 is configured to receive first data information sent by the network apparatus, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

In a possible implementation, the sending unit 1020 is further configured to send first request information to the network apparatus, where the first request information is used to request the network apparatus to send at least one of the following: the first radio frequency channel mapping data, the scatterer information, and the virtual transmit point information.

In a possible implementation, the sending unit 1020 is specifically configured to: when first response information is received, send the first indication information to the network apparatus, where the first response information indicates that the network apparatus accepts the first request information.

In a possible implementation, the first radio frequency channel mapping data and the second radio frequency channel mapping data each include at least one of the following: measurement signal configuration information, geographical position information, a region start location, a channel status prediction value, or sensing quality information.

In a possible implementation, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

In a possible implementation, geographic regions corresponding to the first radio frequency channel mapping data and the second radio frequency channel mapping data are different.

In a design, the apparatus 1000 may perform actions performed by the network apparatus in the foregoing method embodiments.

In an embodiment, the apparatus 1000 includes a receiving unit 1010 and a processing unit 1030. The receiving unit 1010 is configured to receive first indication information sent by a terminal apparatus, where the first indication information indicates that the terminal apparatus has a capability of extending radio frequency channel mapping data; and the processing unit 1030 is configured to send first data information to the terminal apparatus based on the first indication information, where the first data information includes at least one of the following: first radio frequency channel mapping data, scatterer information, or virtual transmit point information, and that the terminal apparatus has the capability of extending the radio frequency channel mapping data includes: The terminal apparatus determines second radio frequency channel mapping data based on the scatterer information and/or the virtual transmit point information.

Optionally, that the processing unit 1030 sends the first data information to the terminal apparatus based on the first indication information may be understood as: The processing unit 1030 controls, based on the first indication information, the sending unit 1020 to send the first data information. Other similar actions of the processing unit 1030 may also be understood in a same way.

In a possible implementation, the receiving unit 1010 is further configured to receive first request information sent by the terminal apparatus, where the first request information is used to request the network apparatus to send at least one of the following: the first radio frequency channel mapping data, the scatterer information, and the virtual transmit point information; and the processing unit 1030 is further configured to send second request information to a first network element based on the first request information, where the second request information is used to request the first network element to determine at least one of the following: the first radio frequency channel mapping data, the scatterer information, or the virtual transmit point information.

In a possible implementation, the receiving unit 1010 is further configured to receive second response information sent by the first network element, where the second response information indicates at least one of the following: the first radio frequency channel mapping data, the scatterer information, or the virtual transmit point information; and the processing unit 1030 is further configured to send first response information to the terminal apparatus based on the second response information, where the first response information indicates that the network apparatus accepts the first request information.

In a possible implementation, the processing unit 1030 is further configured to determine the first data information based on the second response information.

In a possible implementation, the second response information indicates the scatterer information and/or the virtual transmit point information, the first data information includes the first radio frequency channel mapping data, and the first data information further includes the scatterer information and/or the virtual transmit point information.

In a possible implementation, the first radio frequency channel mapping data and the second radio frequency channel mapping data each include at least one of the following: measurement signal configuration information, geographical position information, a region start location, a channel status prediction value, or sensing quality information.

In a possible implementation, the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

In a design, the apparatus 1000 may perform actions performed by the first network element in the foregoing method embodiments.

In an embodiment, the apparatus 1000 includes: a receiving unit, configured to receive second request information sent by a network apparatus, where the second request information is used to request the first network element to determine at least one of the following: first radio frequency channel mapping data, scatterer information, or virtual transmit point information; and a processing unit, configured to send second response information to the network apparatus based on the second request information, where the second response information includes at least one of the following: the first radio frequency channel mapping data, the scatterer information, or the virtual transmit point information.

In a possible implementation, the first radio frequency channel mapping data includes at least one of the following: measurement signal configuration information, geographical position information, a region start location, a channel status prediction value, or sensing quality information.

FIG. 11 is a diagram of another communication apparatus 1100 according to an embodiment of this application.

The apparatus 1100 includes a memory 1110, a processor 1120, and a communication interface 1130. The memory 1110, the processor 1120, and the communication interface 1130 are connected through an internal connection path. The memory 1110 is configured to store instructions. The processor 1120 is configured to execute the instructions stored in the memory 1110, to control the communication interface 1130 to obtain information, or enable the apparatus 1100 to implement the foregoing communication methods. Optionally, the memory 1110 may be coupled to the processor 1120 through an interface, or may be integrated with the processor 1120.

It should be noted that the communication interface 1130 uses a transceiver apparatus, for example, but not limited to, a transceiver. The communication interface 1130 may further include an input/output interface (input/output interface).

The processor 1120 stores one or more computer programs. The one or more computer programs include instructions. When the instructions are run by the processor 1120, the apparatus 1100 is enabled to perform the communication methods in the foregoing embodiments.

In an implementation process, steps in the foregoing methods may be implemented through a hardware integrated logic circuit in the processor 1120 or by using instructions in a form of software. The methods disclosed with reference to embodiments of this application may be directly performed by a hardware processor, or may be performed by using a combination of hardware of the processor and a software module. The software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110 and completes the steps in the foregoing methods in combination with the hardware of the processor. To avoid repetition, details are not described herein again.

Optionally, the communication interface 1130 in FIG. 11 may implement the receiving unit 1010 and the sending unit 1020 in FIG. 10. The processor 1120 in FIG. 11 may implement the processing unit 1030 in FIG. 10.

An embodiment of this application further provides a computer-readable storage medium. The computer-readable storage medium stores program code. When the computer program code is run on a computer, the computer is enabled to perform any one of the methods in FIG. 4 to FIG. 9.

An embodiment of this application further provides a computer program product. The computer product includes a computer program. When the computer program is run, a computer is enabled to perform any one of the methods in FIG. 4 to FIG. 9.

An embodiment of this application further provides a chip, including a circuit. The circuit is configured to perform any one of the methods in FIG. 4 to FIG. 9.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network apparatus, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending first indication information to a network apparatus, wherein the first indication information indicates that a terminal apparatus has a capability of extending radio frequency channel mapping data; and
receiving first data information sent by the network apparatus, wherein the first data information comprises at least one of the following: first radio frequency channel mapping data, scatterer information, or virtual transmit point information, and that the terminal apparatus has the capability of extending the radio frequency channel mapping data comprises: determining second radio frequency channel mapping data based on the scatterer information and/or the virtual transmit point information.

2. The method according to claim 1, wherein the method further comprises:
sending first request information to the network apparatus, wherein the first request information is used to request the network apparatus to send at least one of the following: the first radio frequency channel mapping data, the scatterer information, and the virtual transmit point information.

3. The method according to claim 2, wherein sending the first indication information to the network apparatus comprises:
when first response information is received, sending the first indication information to the network apparatus, wherein the first response information indicates that the network apparatus accepts the first request information.

4. The method according to any one of claims 1 to 3, wherein the first radio frequency channel mapping data and the second radio frequency channel mapping data each comprise at least one of the following: measurement signal configuration information, geographical position information, a region start location, a channel status prediction value, or sensing quality information.

5. The method according to any one of claims 1 to 4, wherein the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

6. The method according to any one of claims 1 to 5, wherein geographic regions corresponding to the first radio frequency channel mapping data and the second radio frequency channel mapping data are different.

7. A communication method, wherein the method comprises:
receiving first indication information sent by a terminal apparatus, wherein the first indication information indicates that the terminal apparatus has a capability of extending radio frequency channel mapping data; and
sending first data information to the terminal apparatus based on the first indication information, wherein the first data information comprises at least one of the following: first radio frequency channel mapping data, scatterer information, or virtual transmit point information, and that the terminal apparatus has the capability of extending the radio frequency channel mapping data comprises: determining second radio frequency channel mapping data based on the scatterer information and/or the virtual transmit point information.

8. The method according to claim 7, wherein the method further comprises:
receiving first request information sent by the terminal apparatus, wherein the first request information is used to request a network apparatus to send at least one of the following: the first radio frequency channel mapping data, the scatterer information, and the virtual transmit point information; and
sending second request information to a first network element based on the first request information, wherein the second request information is used to request the first network element to determine at least one of the following: the first radio frequency channel mapping data, the scatterer information, or the virtual transmit point information.

9. The method according to claim 8, wherein the method further comprises:
receiving second response information sent by the first network element, wherein the second response information indicates at least one of the following: the first radio frequency channel mapping data, the scatterer information, or the virtual transmit point information; and
sending first response information to the terminal apparatus based on the second response information, wherein the first response information indicates that the network apparatus accepts the first request information.

10. The method according to claim 9, wherein before sending the first data information to the terminal apparatus based on the first indication information, the method further comprises:
determining the first data information based on the second response information.

11. The method according to claim 10, wherein the second response information indicates the scatterer information and/or the virtual transmit point information, the first data information comprises the first radio frequency channel mapping data, and the first data information further comprises the scatterer information and/or the virtual transmit point information.

12. The method according to any one of claims 7 to 11, wherein the first radio frequency channel mapping data and the second radio frequency channel mapping data each comprise at least one of the following: measurement signal configuration information, geographical position information, a region start location, a channel status prediction value, or sensing quality information.

13. The method according to any one of claims 7 to 12, wherein the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

14. The method according to any one of claims 7 to 13, wherein geographic regions corresponding to the first radio frequency channel mapping data and the second radio frequency channel mapping data are different.

15. A communication method, wherein the method comprises:
receiving second request information sent by a network apparatus, wherein the second request information is used to request a first network element to determine at least one of the following: first radio frequency channel mapping data, scatterer information, or virtual transmit point information; and
sending second response information to the network apparatus based on the second request information, wherein the second response information comprises at least one of the following: the first radio frequency channel mapping data, the scatterer information, or the virtual transmit point information.

16. The method according to claim 15, wherein the first radio frequency channel mapping data comprises at least one of the following: measurement signal configuration information, geographical position information, a region start location, a channel status prediction value, or sensing quality information.

17. A communication apparatus, wherein the apparatus comprises a receiving unit and a sending unit;
the sending unit is configured to send first indication information to a network apparatus, wherein the first indication information indicates that a terminal apparatus has a capability of extending radio frequency channel mapping data; and
the receiving unit is configured to receive first data information sent by the network apparatus, wherein the first data information comprises at least one of the following: first radio frequency channel mapping data, scatterer information, or virtual transmit point information, and that the terminal apparatus has the capability of extending the radio frequency channel mapping data comprises: determining second radio frequency channel mapping data based on the scatterer information and/or the virtual transmit point information.

18. The apparatus according to claim 17, wherein
the sending unit is further configured to send first request information to the network apparatus, wherein the first request information is used to request the network apparatus to send at least one of the following: the first radio frequency channel mapping data, the scatterer information, and the virtual transmit point information.

19. The apparatus according to claim 18, wherein
the sending unit is specifically configured to: when first response information is received, send the first indication information to the network apparatus, wherein the first response information indicates that the network apparatus accepts the first request information.

20. The apparatus according to any one of claims 17 to 19, wherein the first radio frequency channel mapping data and the second radio frequency channel mapping data each comprise at least one of the following: measurement signal configuration information, geographical position information, a region start location, a channel status prediction value, or sensing quality information.

21. The apparatus according to any one of claims 17 to 20, wherein the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

22. The apparatus according to any one of claims 17 to 21, wherein geographic regions corresponding to the first radio frequency channel mapping data and the second radio frequency channel mapping data are different.

23. A communication apparatus, wherein the apparatus comprises a receiving unit and a processing unit;
the receiving unit is configured to receive first indication information sent by a terminal apparatus, wherein the first indication information indicates that the terminal apparatus has a capability of extending radio frequency channel mapping data; and
the processing unit is configured to send first data information to the terminal apparatus based on the first indication information, wherein the first data information comprises at least one of the following: first radio frequency channel mapping data, scatterer information, or virtual transmit point information, and that the terminal apparatus has the capability of extending the radio frequency channel mapping data comprises: determining second radio frequency channel mapping data based on the scatterer information and/or the virtual transmit point information.

24. The apparatus according to claim 23, wherein
the receiving unit is further configured to receive first request information sent by the terminal apparatus, wherein the first request information is used to request a network apparatus to send at least one of the following: the first radio frequency channel mapping data, the scatterer information, and the virtual transmit point information; and
the processing unit is further configured to send second request information to a first network element based on the first request information, wherein the second request information is used to request the first network element to determine at least one of the following: the first radio frequency channel mapping data, the scatterer information, or the virtual transmit point information.

25. The apparatus according to claim 24, wherein
the receiving unit is further configured to receive second response information sent by the first network element, wherein the second response information indicates at least one of the following: the first radio frequency channel mapping data, the scatterer information, or the virtual transmit point information; and
the processing unit is further configured to send first response information to the terminal apparatus based on the second response information, wherein the first response information indicates that the network apparatus accepts the first request information.

26. The apparatus according to claim 25, wherein
the processing unit is further configured to determine the first data information based on the second response information.

27. The apparatus according to claim 26, wherein the second response information indicates the scatterer information and/or the virtual transmit point information, the first data information comprises the first radio frequency channel mapping data, and the first data information further comprises the scatterer information and/or the virtual transmit point information.

28. The apparatus according to any one of claims 23 to 27, wherein the first radio frequency channel mapping data and the second radio frequency channel mapping data each comprise at least one of the following: measurement signal configuration information, geographical position information, a region start location, a channel status prediction value, or sensing quality information.

29. The apparatus according to any one of claims 23 to 28, wherein the first indication information further indicates at least one of the following: the channel status prediction value corresponding to the first radio frequency channel mapping data and the channel status prediction value corresponding to the second radio frequency channel mapping data, the region start location corresponding to the first radio frequency channel mapping data and the region start location corresponding to the second radio frequency channel mapping data, a region location spacing between the first radio frequency channel mapping data and the second radio frequency channel mapping data, or available coordinates corresponding to the second radio frequency channel mapping data.

30. The apparatus according to any one of claims 24 to 29, wherein geographic regions corresponding to the first radio frequency channel mapping data and the second radio frequency channel mapping data are different.

31. A communication apparatus, wherein the apparatus comprises a receiving unit and a processing unit;
the receiving unit is configured to receive second request information sent by a network apparatus, wherein the second request information is used to request a first network element to determine at least one of the following: first radio frequency channel mapping data, scatterer information, or virtual transmit point information; and
the processing unit is configured to send second response information to the network apparatus based on the second request information, wherein the second response information comprises at least one of the following: the first radio frequency channel mapping data, the scatterer information, or the virtual transmit point information.

32. The apparatus according to claim 31, wherein the first radio frequency channel mapping data comprises at least one of the following: measurement signal configuration information, geographical position information, a region start location, a channel status prediction value, or sensing quality information.

33. A communication apparatus, comprising a processor and a memory, wherein the processor is coupled to the memory, and is configured to read and execute instructions in the memory, to perform the method according to any one of claims 1 to 16

34. A computer-readable storage medium, wherein the computer-readable storage medium stores program code, and when the computer program code is run on a computer, the computer is enabled to perform the method according to any one of claims 1 to 16.

35. A chip, comprising a circuit, wherein the circuit is configured to perform the method according to any one of claims 1 to 16.

36. A communication system, wherein the communication system comprises a terminal apparatus, a network apparatus, and a first network element, and the communication system is configured to perform the following steps:
sending, by the terminal apparatus, first request information to the network apparatus, wherein the first request information is used to request the network apparatus to send at least one of the following: first radio frequency channel mapping data, scatterer information, and virtual transmit point information;
sending, by the network apparatus, second request information to the first network element based on the first request information, wherein the second request information is used to request the first network element to determine at least one of the following: the first radio frequency channel mapping data, the scatterer information, or the virtual transmit point information;
sending, by the first network element, second response information to the network apparatus based on the second request information, wherein the second response information comprises at least one of the following: the first radio frequency channel mapping data, the scatterer information, or the virtual transmit point information;
determining, by the network apparatus, first data information based on the second response information, wherein the first data information comprises at least one of the following: the first radio frequency channel mapping data, the scatterer information, or the virtual transmit point information;
sending, by the terminal apparatus, first indication information to the network apparatus, wherein the first indication information indicates that the terminal apparatus has a capability of extending radio frequency channel mapping data, and that the terminal apparatus has the capability of extending radio frequency channel mapping data comprises: determining second radio frequency channel mapping data based on the scatterer information and/or the virtual transmit point information; and
sending, by the network apparatus, the first data information to the terminal apparatus based on the first indication information.
